# EUROPEAN PATENT APPLICATION

(11) **EP 1 580 433 A2**
(43) Date of publication of application: **28.09.2005**
(21) Application number: 05005585.4
(22) Date of filing: 15.03.2005
(51) Int. Cl.: F04C 18/356, F04C 23/00

(54) **Multistage rotary compressor**

(30) Priority: 17.03.2004 JP 2004076171
(71) Applicant: SANYO ELECTRIC CO., LTD., Osaka (JP)
(72) Inventor: Sato, Kazuya, Oizumi-machi Oura-gun Gunma (JP)
(74) Representative: Parry, Simon James

(57) **Abstract**

The present invention relates to a multistage rotary compressor, in the multistage rotary compressor, a motor-operating element (5) and a rotary compressing element (6) are provided at upper and lower portions in a closed vessel (1). In the rotary compressing element (6), a low stage side rotary compressing element (9) and a high stage side rotary compressing element (11) are positioned on the upper and lower sides respectively. An upper supporting member (12) is attached onto the low stage side rotary compressing element (9), and a substantially cup-shaped cover material (16) is attached onto the upper supporting member (12) to close an opening surface of a muffling chamber (12b) formed in the upper supporting member (12). The substantially cup-shaped cover material (16) is formed in a high dimension so that the upper end of the cover material (16) is positioned at an upper end or near an upper end of a bearing portion (12a) formed in the upper supporting member (12). Further, a discharge hole (16b) for discharging a refrigerant gas is provided in the upper end surface of the cover material (16) near an outer diameter portion of the bearing portion (12a). Consequently, the level (h) of the oil surface for oil filled in the closed vessel (1) can be set so as to be near the upper end of the cover material (16). According to the present invention, the amount of oil filled in the closed vessel can be increased and the oil separation in the closed vessel can be efficiently made.

## Description

### BACKGROUND OF THE INVENTION

### 1. Field of the Invention

The present invention relates to a multistage rotary compressor, and more specifically it relates to a multistage rotary compressor that can increase the amount of oil filled into a closed vessel and can efficiently make oil separation in the closed vessel.

### 2. Description of the Related Art

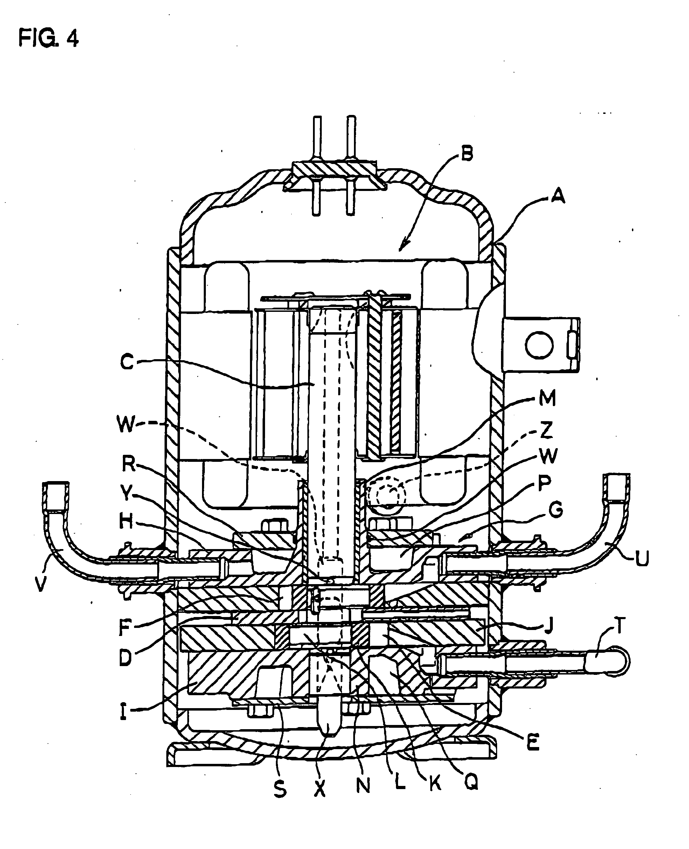

A multistage rotary compressor including a motor-operating element and a rotary compressing element driven by this motor-operating element disposed in a closed vessel has been known. For example, a two-stage rotary compressor shown in FIG. 4 will be described. In FIG. 4, an upper portion in a dosed vessel A is provided with a motor-operating element B composed of a stator and a rotor, the rotor is journalled to an upper end portion of a rotating shaft C, a lower portion in the closed vessel A is provided with a rotary compressing element G composed of a low stage side rotary compressing element E and a high stage side rotary compressing element F through a partition plate D, and supporting members H and I are attached to upper and lower portions of the rotary compressing element G respectively. Each of the low stage side rotary compressing element E and the high stage side rotary compressing element F includes a disc-shaped cylinder J and a roller K, which rotates on the inside of the cylinder eccentrically. These rollers K are fitted on eccentric portions L provided on the rotating shaft C respectively. Further, a low pressure chamber and a high pressure chamber are respectively formed in the cylinders J by the fact that a vane biased with a spring not shown always abuts on an outer circumferential surface of the roller K. The upper and lower supporting members H and I are provided with bearing portions M and N at the center portions respectively, and shaft-support the rotating shaft C. Muffling chambers P and Q are respectively provided 80 as to surround outer circumferences of the bearing portions M and N, and cover plates R and S for closing the opening surfaces of the muffling chambers P and Q are respectively attached thereto.

When a low pressure refrigerant gas is introduced through a lead-in pipe T connected to the closed vessel, this low pressure refrigerant gas is sucked into a suction port in the lower supporting member I and sucked from this suction port to the low pressure chamber in the cylinder J of the low stage side compressing element E where the refrigerant gas is compressed into an intermediate pressure by eccentric rotation of the roller K. The refrigerant gas compressed into the intermediate pressure is discharged from the high pressure chamber of the cylinder J to the muffling chamber Q in the lower supporting member I, and it passes through a passage (not shown) communicating with the muffling chamber Q to be discharged into the dosed vessel A. The intermediate pressure refigerant gas discharged into the dosed vessel A is then taken out of a discharge opening Z of the closed vessel A to the outside and cooled. After that the refrigerant gas is sucked into a suction port provided in the upper supporting member H from a lead-in pipe U, and is sucked into the low pressure chamber in the cylinder J of the high stage side rotary compressing element F, where it is compressed into high pressure by eccentric rotation of the roller K. This refrigerant gas compressed into the high pressure is discharged from the high pressure chamber of the cylinder J to a muffling chamber P in the upper supporting member H and is discharged from a discharge port communicating with the muffling chamber P to the outside of the dosed vessel A through a lead-out pipe V connected to the closed vessel A.

Then the high pressure refrigerant gas discharged to the outside of the closed vessel A is supplied to for example a gas cooler in a refrigeration cycle in an air conditioner or the like. Then after cooling the refrigerant gas by the gas cooler, it is pressure-reduced by an expansion valve and vaporized by an evaporator. Then the refrigerant gas passes through an accumulator to be returned from the lead-in pipe T to the compressor. The thus formed two-stage rotary compressors have been disclosed in for example Japanese Patent Laid-Open Publications No. 2003-97479 and No. 02-294587, etc.

In the above-mentioned conventional multistage rotary compressor, oil for lubrication is filled into a dosed vessel A. The oil is accumulated on the bottom portion in the dosed vessel to form an oil reservoir. Then during the operation of the multistage rotary compressor oil in the oil reservoir is pumped up by an oil pump X to be raised along an inner surface of a hole W formed axially in a rotating shaft C, and then the oil is oozed from the hole W onto an outer surface of the rotating shaft C through a plurality of oil holes Y provided on predetermined portions of the rotating shaft C to lubricate the bearing portions M and N in the supporting members H and I and the rollers K in the high stage side rotary compressing element F and the low stage side rotary compressing element E and the like so that the sliding portion of the rotating shaft C is protected from wear.

The oil raised along the inner surface of the hole W of the rotating shaft C is discharged into the dosed vessel A through the upper end of the rotating shaft C and drops down from a small gap between the stator and rotor in the motor-operating element B to return to the oil reservoir. However, a part of oil discharged into the dosed vessel is mixed with intermediate pressure refrigerant gas discharged into the dosed vessel A and leaves the closed vessel A together with the intermediate pressure refrigerant gas. The oil-mixed intermediate pressure refrigerant gas is cooled as mentioned above and then introduced to the high stage side rotary compressing element F to be compressed into high pressure. Then it is discharged outside the dosed vessel A. The oil-mixed high pressure refrigerant gas is supplied to a refrigerating cycle in an air conditioner or the like as described above, and is returned from the refrigeration cycle to the compressor through an accumulator. At that time the most part of oil is separated from the refrigerant gas in the accumulator.

As a result the oil filled in the closed vessel A is decreased little by little with an operation of the compressor. Thus, the level of the oil surface in the oil reservoir in the dosed vessel A is gradually lowered. When the level of the oil surface is below a lower end surface of the oil pump X, oil cannot be sucked up from the oil reservoir. In the circumstances, the bearing portions M and N in the supporting members H and I and the rollers K in the high stage side rotary compressing element F and the low stage side rotary compressing element E are in a lack of lubrication and the sliding portion of the rotating shaft C cannot be protected from wear so that the rotation of the rotating shaft C is hindered and compressive performance is lowered.

If the amount of oil filled into the closed vessel A is increased, the above-mentioned problem can be solved. However, the level of the oil surface in the oil reservoir at a bottom portion of the closed vessel A cannot be made at a higher position than the cover plate R. If the level of the oil surface in the oil reservoir exceeds the cover plate R, oil flows into the oil reservoir from an outlet of a passage (not shown) for discharging the intermediate pressure refrigerant gas compressed by the low stage side rotary compressing element into the closed vessel A so that the gas discharge is hindered, resulting in that the compression function is remarkably reduced. To prevent the inflow of oil it is necessary to vertically provide a comparatively high discharge pipe (not shown) at the outlet of the passage (not shown) for example,

Further, a refrigerant gas, which is returned from the refrigerating cycle to the compressor through an accumulator, is oil-separated by the accumulator as described above. Nevertheless the oil cannot be perfectly separated and a part of oil remains in the refrigerant gas. The oil-containing refrigerant gas is compressed by the low stage side rotary compressing element E into an intermediate pressure to be discharged into the dosed vessel A. The intermediate pressure refrigerant gas discharged into the dosed vessel A is blown onto a lower end portion of the motor-operating element B so that the oil in the refrigerant gas is separated. However, since the outlet of the passage (not shown) is not near to the lower end portion of the motor-operating element B, there is a problem that the oil separation in the refrigerant gas in the closed vessel cannot be efficiently made.

### SUMMARY OF THE INVENTION

The present invention was made to solve such a problem in a conventional multistage rotary compressor and the object of the present invention is to provide e multistage rotary compressor in which the amount of oil filled into a dosed vessel A can be increased and oil separation in the dosed vessel can be efficiently made.

To attain the above-mentioned object a multistage rotary compressor according to the first aspect of the present invention comprising a plurality of rotary compressing elements in a dosed vessel, discharging a discharge refrigerant gas in any one of said rotary compressing elements into the closed vessel, and discharging the discharge refrigerant gas in other rotary compressing elements outside the closed vessel is characterized in that said rotary compressing elements are positioned on upper and lower portions, a cover material, which has a discharge hole for discharging a refrigerant gas into said closed vessel, and defines a discharge muffling chamber, is mounted onto the upper rotary compressing element, and when oil is filled into said dosed vessel, the oil level of said filled oil is designed so as to be slightly lower than the discharge hole in said cover material,

Further, a multistage rotary compressor according to the second aspect of the present invention configured so that a motor-operating element in a closed vessel and rotary compressing elements driven by said motor-operating element are provided on upper and lower portions respectively, a low stage compressing element in said rotary compressing elements is positioned on the upper side and an high stage compressing element in said rotary compressing elements is positioned is the lower side, an intermediate pressure refrigerant gas compressed by said low stage side rotary compressing element is discharged into said closed vessel, the intermediate pressure refrigerant gas discharged into said closed vessel is taken outside the closed vessel and then is cooled and supplied to said high stage side rotary compressing element to be compressed into high pressure, and the high pressure refrigerant gas is discharged outside said dosed vessel is characterized in that an upper supporting member is attached onto the upper side of said low stage side rotary compressing element, and to the upper side of said upper supporting member is attached a substantially cup-shaped cover material, which doses an opening surface of a muffling chamber formed in the upper supporting member, an upper end of said cover material being positioned on an upper end or near the upper end of a bearing portion formed in said upper supporting member, and a discharge hole for discharging a refrigerant gas is provided on an upper end surface of said cover material and near an outer diameter portion of said bearing portion.

Further, a multistage rotary compressor according to the third aspect of the invention configured so that a motor-operating element and rotary compressing elements driven by said motor-operating element are provided on upper and lower portions in a dosed vessel, a high stage compressing element in said rotary compressing elements is positioned on the upper side and an low stage compressing element in said rotary compressing elements is positioned is the lower side, intermediate pressure refrigerant gas compressed by said low stage side rotary compressing element is taken outside the dosed vessel and is then cooled and supplied to said high stage side rotary compressing element to be compressed into high pressure, and the high pressure refrigerant gas is discharged into said closed vessel and the high pressure refrigerant gas discharged into said closed vessel is discharged outside said dosed vessel, is characterized in that an upper supporting member is attached onto the upper side of said high stage side rotary compressing element, and to the upper side of said upper supporting member is attached a substantially cup-shaped cover material, which closes an opening surface of a muffling chamber formed in the upper supporting member, an upper end of said cover material being positioned on an upper end or near the upper end of a bearing portion formed in said upper supporting member, and a discharge hole for discharging refrigerant gas is provided on an upper end surface of said cover material and near an outer diameter portion of said bearing portion.

According to the first aspect of the invention, since in the multistage rotary compressor comprising a plurality of rotary compressing elements in a dosed vessel, discharge refrigerant gas in any one of said rotary compressing elements being discharged into the closed vessel, and discharge refrigerant gas in other rotary compressing elements being discharged outside the dosed vessel, a cover material, which defines a discharge muffling chamber, is mounted onto the upper rotary compressing element, and when oil is filled into said closed-vessel, the oil level of said filled oil is designed so as to be slightly lower than the discharge hole formed in the cover material, the amount of oil filled into the dosed vessel can be made more than that of a conventional case. Therefore, even if the level of the oil surface is lowered during the operation, a situation in which oil cannot be sucked up from the oil reservoir does not occur, a lack of lubrication in the sliding portion and the like of the rotating shaft is removed to protect them from wear and at the same time the compressive performance can be maintained significantly.

Further, according to the second aspect of the invention, since in the inside intermediate pressure type multistage rotary compressor, the low stage side rotary compressing element of the rotary compressing elements is positioned on the high stage side rotary compressing element, the upper supporting member is provided on the low stage side rotary compressing element and the substantially cup-shaped cover material is provided on the upper supporting member in such a manner that the height of the cover material is extended to the position of an upper end of the bearing portion in the upper supporting member, the amount of oil filled into the closed vessel can be made more. Therefore, even if the level of the oil surface is lowered during the operation, a situation in which oil cannot be sucked up from the oil reservoir does not occur, a lack of lubrication in the sliding portion and the like of the rotating shaft is removed to protect them from wear and at the same time the compressive performance can be maintained significantly. Further, since the intermediate pressure refrigerant gas compressed by the low stage side rotary compressing element is discharged from the discharge hole provided on an upper end surface of the substantially cup-shaped cover material near an outer diameter portion of the bearing portion, the refrigerant gas can be blown onto a lower end portion of the rotor positioned just near the discharge hole. Consequently, oil contained in the intermediate pressure refrigerant gas discharged from the discharge hole can be efficiently separated in the closed vessel.

Further, according to the third aspect of the invention, since in the inside intermediate pressure type multistage rotary compressor, the high stage side rotary compressing element of the rotary compressing element is positioned on the low stage side rotary compressing element, the upper supporting member is provided on the high stage side rotary compressing element and the substantial cup-shaped cover material is provided on the upper supporting member in such a manner that the height of the cover material is extended to the position of an upper end of the bearing portion in the upper supporting member, the amount of oil filled into the closed vessel can be made more. Therefore, even if the level of the ofl surface is lowered during the operation, a situation in which oil cannot be sucked up from the oli reservoir does not occur, a lack of lubrication in the sliding portion and the like of the rotating shaft is removed to protect them from wear and at the same time the compressive performance can be maintained significantly, Further, since the high pressure refrigerant gas compressed by the high stage side rotary compressing element is discharged from the discharge hole provided on an upper end surface of the substantially cup-shaped cover material near an outer diameter portion of the bearing portion, the refrigerant gas can be blown onto a lower end portion of the rotor positioned just near the discharge hole. Consequently, oil contained in the high pressure refrigerant gas discharged from the discharge hole can be efficiently separated in the dosed vessel.

Further, according to the third aspect of the invention, in the multistage rotary compressing element according to the first or second aspect, since the level of oil filled in the closed vessel is set near the upper end of the substantially cup-shaped cover material, the amount of oil in the oil reservoir formed on the bottom portion of the dosed vessel can be increased. Accordingly, a suction of oil from the oil reservoir during operation can be ensured, a lack of lubrication in the sliding portion and the like of the rotating shaft is removed to protect them from wear and at the same time the compressive performance can be maintained significantly.

### BRIEF DESCRPTION OF DRAWINGS

FIG. 1 is a schematic vertical cross-sectional view showing a first embodiment of a multistage rotary compressor according to the present invention;
FIG. 2 is a schematic vertical cross-sectional view showing a second embodiment of a multistage rotary compressor according to the present invention;
FIG. 3 is a schematic vertical cross-sectional view showing a third embodiment of a multistage rotary compressor according to the present invention; and
FIG. 4 is a schematic vertical cross-sectional view showing one example of a conventional multistage rotary compressor.

### DETAILED DESCRIPTION OF THE PREFERRED EMBODIMENTS

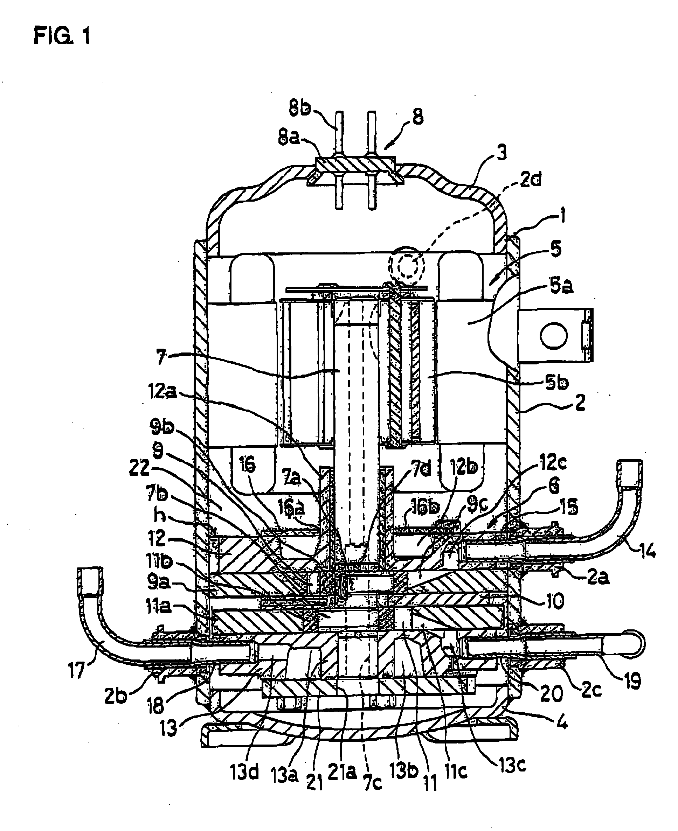

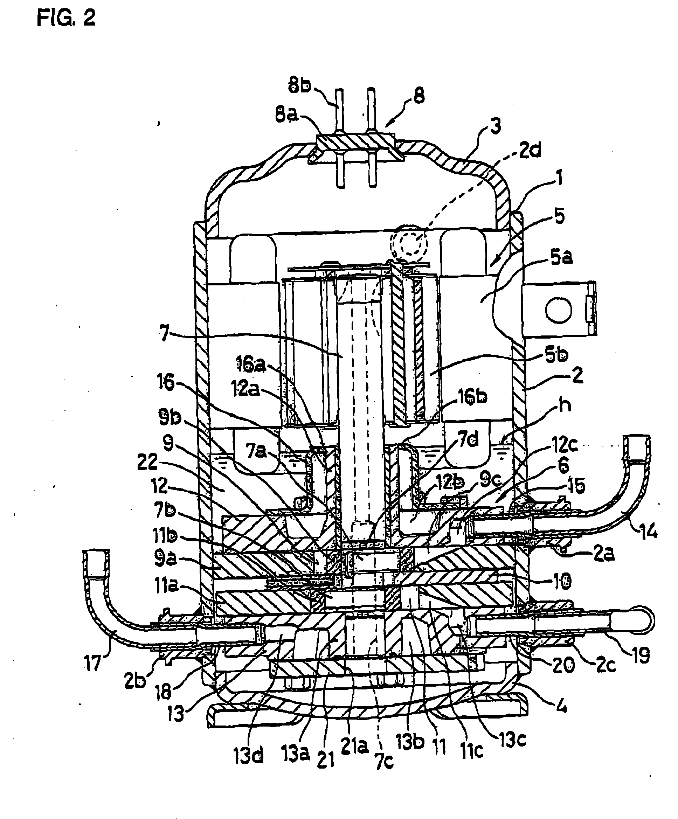

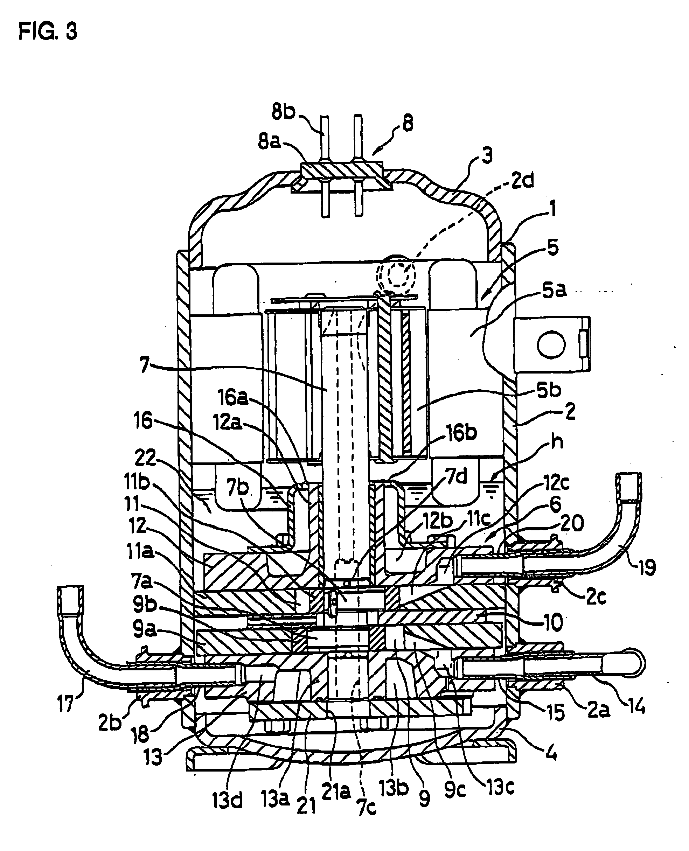

Preferred embodiments of the present invention will be described with reference to attached drawings. In the drawings, FIG. 1 is a schematic vertical cross-sectional view showing a first embodiment of a multistage rotary compressor according to the present invention, FIG. 2 is a schematic vertical cross-sectional view showing a second embodiment of a multistage rotary compressor according to the present invention, and FIG. 3 is a schematic vertical cross-sectional view showing a third embodiment of a multistage rotary compressor according to the present invention.

### Example 1

First, a first embodiment of the present invention shown in FIG. 1 will be described. The reference numeral 1 is a dosed vessel. The closed vessel 1 is comprised of a cylindrical vessel 2 and end caps 3, 4 attached to opening end portions of the vessel 2, and is provided in such a manner that a motor-operating element 5 and a rotary compressing element 6 are positioned at upper and lower portions in this closed vessel 1 respectively.

The motor-operating element 5 is comprised of an annular stator 5a fixed to an inner surface of the vessel 2 and a rotor 5b, which rotates inside the stator 5a. The rotor 5b is journalled to an upper end portion of a rotating shaft 7. This motor-operating element 5 rotates the rotor 5b by feed to the stator 5a through a terminal 8 attached to the end cap 3.

The terminal 8 is comprised of a base 8a fixed to an mounting hole of the end cap 3 and a plurality of connecting terminals 8b provided on the base 8a while penetrating through an electric insulating material such as glass, synthetic resin or the like. Although not shown, a lower end portion of the connecting terminal 8b is connected to the stator 5a of the motor-operating element 5 through an internal lead wire, and an upper end portion of the connecting terminal 8b is connected to an external power source through an external lead wire.

The rotary compressing element 6 is comprised of a low stage side rotary compressing element 9 and a high stage side compressing element 11 provided under the low stage side rotary compressing element 9 through a partition plate 10. In the rotary compressing element 6, relationship between the upper and lower positions is reversed to conventional general multistage rotary compressing element by providing the high stage side rotary compressing element 11 at the lower side of the low stage side rotary compressing element 9. The low stage side rotary compressing element 9 includes a cylinder 9a and a roller 9b, which rotates eccentrically while being fitted to a low stage side eccentric portion 7a provided on the rotating shaft 7. Also, the high stage side rotary compressing element 11 includes a cylinder 11a and a roller 11b, which rotates eccentrically while being fitted to a high stage side eccentric portion 7b provided on the rotating shaft 7.

A vane biased by a spring not shown always abuts on an outer circumferential surface of the roller 9b of the low stage side rotary compressing element 9 so that the inside of the cylinder 9a is defined between a low pressure chamber and a high pressure chamber. Also a vane biased by a spring always abuts on an outer circumferential surface of the roller 11b of the high stage side rotary compressing element 11 so that the inside of the cylinder 11a is defined between a low pressure chamber and a high pressure chamber. It is noted that the low stage side eccentric portion 7a provided on the rotating shaft 7 and the high stage side eccentric portion 7b are shifted by a phase of 180°.

Further, on the low stage side rotary compressing element 9 is provided an upper supporting member 12 and below the high stage side rotary compressing element 11 is provided a lower supporting member 13. The upper supporting member 12 and the lower supporting member 13 are integrally fixed to each other by a plurality of through bolts with the low stage side rotary compressing element 9, the partition plate 10 and the high stage side rotary compressing element 11 sandwiched therebetween,

The upper supporting member 12 has a bearing portion 12a at the center. The bearing portion 12a is formed to be thin in thickness and long in size, and fits a sleeve inside to rotatably support the rotating shaft 7. Then on the upper surface side of the upper supporting member 12 is provided a muffling chamber 12b along the outer circumference of the bearing portion 12a, and the muffling chamber 12b communicates with an outlet of a high pressure chamber in the cylinder 9a of the low stage side rotary compressing element. Further, a suction port 12c is provided in the upper supporting member 12. The suction port 12c communicates with an inlet of a low pressure chamber through a passage 9c formed in the cylinder 9a and at the same time communicates with a refrigerant gas lead-in pipe 14 connected to a lead-in opening 2a of the vessel 2 through a sleeve 15.

Further, a cover material 16 is attached onto an upper surface of the upper supporting member 12. The cover material 16 defines a muffling chamber 12b and is provided with a hole 16a at the center, through which the bearing portion 12a is penetrated. Also a discharge hole 16b for discharging refrigerant gas is provided near the hole 16a.

The lower supporting member 13 has a bearing portion 13a at the center, and the bearing portion 13a is formed in a thick wall and in a short dimension and rotatably supports a lower end portion of the rotating shaft 7 without fitting a sleeve inside. Also on the lower surface side of the lower supporting member 13 is provided a muffling chamber 13b along the outer circumference of the bearing portion 13a, and the muffling chamber 13b communicates with an outlet of a high pressure chamber in the cylinder 11a of the high stage side rotary compressing element 11, and at the same time it communicates with a discharge port 13d formed in the lower supporting member 13. This discharge port 13d communicates with a refrigerant gas lead-out pipe 17 connected to the lead-out opening 2b of the vessel 2 through a sleeve 18. Further, a suction port 13c is provided in the lower supporting member 13. The suction port 13c communicates with an inlet of a low pressure chamber through a passage 11c formed in the cylinder 11a and at the same time communicates with a refrigerant gas return lead-in pipe 19 connected to a return lead-in opening 2c of the vessel 2 through a sleeve 20,

Further, a cover plate 21 is fixed onto a lower surface of the lower supporting member 13 with bolts to define the muffling chamber 13b, and the cover plate 21 is provided with a hole 21a at the center. This hole 21a faces a lower end portion of the rotating shaft 7. It is noted that in the present embodiment an oil pump is not attached to a lower end portion of the rotating shaft 7.

Lubricating oil is filled in the closed vessel 1 and an oil reservoir is formed at the bottom portion. However, the level h of the oil surface in the oil reservoir 22 is set at the oil filling so that it is slightly lower than the discharge hole 16b of the cover material 16. Accordingly, the amount of oil in the oil reservoir 22 can be more increased as compared with the conventional case. It is noted that if the discharge hole 16b of the cover material 16 is raised to form an annular tube shape, the amount of filled oil can be further increased by setting the level h of the oil surface in the oil reservoir 22 at a slightly lower portion than the upper end surface of the annular tube shaped discharge hole 16a.

Actions of the thus formed internal intermediate pressure type multistage rotary compressor will be described. When the stator 5a of the motor-operating element 5 is energized through the terminal 8, the rotor 5b is rotated and the rotary compressing element 6 is driven by the rotation of the rotor 5b as well as the rotating shaft 7. Then when low pressure refrigerant gas is introduced through the refrigerant gas lead-in pipe 14 connected to the closed vessel 1, the low pressure refrigerant gas is sucked to the suction port 12c of the upper supporting member 12 and passes through the passage 9c formed in the cylinder 9a of the low stage side rotary compressing element 9 to be sucked into the low pressure chamber, and the low pressure refrigerant gas is compressed into intermediate pressure by eccentric rotation of the roller 9b. The refrigerant gas compressed into the intermediate pressure is discharged to the muffling chamber 12b in the upper supporting member 12 from the high pressure chamber in the cylinder 9a and is discharged to the inside of the closed vessel 1 from the discharge hole 16b of the cover material 16.

The intermediate pressure refrigerant gas discharged into the closed vessel 1 passes through a small gap between the stator 5a and rotor 5b in the motor-operating element 5 and moves into an upper region of the closed vessel 1. Then the intermediate pressure refrigerant gas is discharged to the outside of the dosed vessel 1 from an discharge opening 2d formed at an upper portion of the vessel 2 and is sent to a cooler (not shown) through a discharge pipe (not shown) connected to the discharge opening 2d and is cooled in the cooler. After that the intermediate pressure refrigerant gas is introduced to the suction port 13c in the lower supporting member 13 through the refrigerant gas return lead-in pipe 19.

The refrigerant gas led in the suction port 13c of the lower supporting member 13 passes through the passage 11c formed in the cylinder 11a of the high stage side rotary compressing element 11 to be sucked in the low pressure chamber, and is compressed into high pressure by eccentric rotation of the roller 11b. The refrigerant gas compressed into high pressure is discharged to the muffling chamber 13b in the lower supporting member 13 from the high pressure chamber in the cylinder 11a and is discharged from the discharge port 13d communicating with the muffling chamber 13b to the outside of the closed vessel 1 through the refrigerant gas lead-out pipe 17.

Then the high pressure refrigerant gas discharged outside the closed vessel 1 is supplied to for example a gas cooler in a refrigeration cycle such as an air-conditioner (not shown) and cooled by the gas cooler After that the refrigerant gas is pressure reduced by an expansion valve and is evaporated by an evaporator, and then it passes through an accumulator and is returned to the compressor from the refrigerant gas lead-in pipe 14.

In the operation of the above-mentioned inside intermediate pressure type multistage rotary compressor, an oil reservoir 22 exists at the bottom portion in the closed vessel 1 and oil is pumped up from a lower end portion of the rotating shaft 7 being immersed in the oil reservoir 22. A hole 7c is formed inside the rotating shaft 7 in the axial direction, and the oil in the oil reservoir 22 is raised along the inner surface of the hole 7c of the rotating shaft 7 by the rotation of the rotating shaft 7 so that it is oozed out onto an outer surface of the rotating shaft 7 through small holes 7d formed at a plurality of portions in the rotating shaft 7. The oil oozed out of the small holes 7d lubricates sliding portions of the rotating shaft 7 in the bearing portion 13e of the lower supporting member 13, the bearing portion 12a of the upper supporting member 12, the low stage side eccentric portion 7a and the high stage side eccentric portion 7b. It is noted that the oil raised along the inner surface of the hole 7c of the rotating shaft 7 is discharged from an upper end of the rotating shaft 7 into the closed vessel and drops down from a small gap between the stator 5a and the rotor 5b in the motor-operating element 5 to return to the oil reservoir 22.

Although a level h of the oil surface in the oil reservoir 22 is positioned at a slightly lower portion than the discharge hole 18b in the cover material 16 during oil filling, the level h is gradually lowered during operation. In the present embodiment, since the level of the oil surface during oil filling is set as high as possible as described above so that the amount of oil in the oil reservoir 22 is increased more than in the conventional case, the level h of the oil surface is not markedly lowered during operation. Thus, the oil in the oil reservoir 22 can be reliably pumped up from a lower end portion of the rotating shaft 7. Consequently, the lubrication of the sliding portions in the rotating shaft 7 is sufficiently made to protect the sliding portions from wear and at the same time the compressive performance can be highly maintained,

### Example 2

Next, a second embodiment shown in FIG. 2 will be described. In the second embodiment the components corresponding to the above-mentioned first embodiment are denoted by the same reference numerals as described above.

In FIG. 2, the reference numeral 1 is a dosed vessel. The dosed vessel 1 is comprised of a vessel 2 formed into a substantially cylindrical shape and end caps 3, 4 attached to opening end portions of the vessel 2, and is provided in such a manner that a motor-operating element 5 and a rotary compressing element 6 are positioned at upper and lower portions in this closed vessel 1 respectively.

The motor-operating element 5 is comprised of an annular stator 5a fixed to an inner surface of the vessel 2 and a rotor 5b, which rotates inside the stator 5a. The rotor 5b is journalled to an upper end portion of a rotating shaft 7. This motor-operating element 5 rotates the rotor 5b by feed to the stator 5a through a terminal 8 attached to the end cap 3.

The terminal 8 is comprised of a base 8a fixed to an mounting hole of the end cap 3 and a plurality of connecting terminals 8b provided on the base 8a while penetrating through an electric insulating material such as glass, synthetic resin or the like. Although not shown, a lower end portion of the connecting terminal 8b is connected to the stator 5a of the motor-operating element 5 through an internal lead wire, and an upper end portion of the connecting terminal 8b is connected to an external power source through an external lead wire.

The rotary compressing element 6 is comprised of a low stage side rotary compressing element 9 and a high stage side compressing element 11 provided under the low stage side rotary compressing element 9 through a partition plate 10. In the rotary compressing element 6, relationship between the upper and lower positions is reversed to conventional general multistage rotary compressing element by providing the high stage side rotary compressing element 11 at the lower side of the low stage side rotary compressing element 9. The low stage side rotary compressing element 9 includes a cylinder 9a and a roller 9b, which rotates eccentrically while being fitted to a low stage side eccentric portion 7a provided on the rotating shaft 7. Also, the high stage side rotary compressing element 11 includes a cylinder 11a and a roller. 11b, which rotates eccentrically while being fitted to a high stage side eccentric portion 7b provided on the rotating shaft 7.

A vane biased by a spring not shown always abuts on an outer circumferential surface of the roller 9b of the low stage side rotary compressing element 9 so that the inside of the cylinder 9a is defined between a low pressure chamber and a high pressure chamber Also a vane biased by a spring always abuts on an outer circumferential surface of the roller 11b of the high stage side rotary compressing element 11 so that the inside of the cylinder 11a is defined between a low pressure chamber and a high pressure chamber. It is noted that the low stage side eccentric portion 7a provided on the rotating shaft 7 and the high stage side eccentric portion 7b are shifted by a phase of 180°.

Further, on the low stage side rotary compressing element 9 is provided an upper supporting member 12 and below the high stage side rotary compressing element 11 is provided a lower supporting member 13. The upper supporting member 12 and the lower supporting member 13 are integrally fixed to each other by a plurality of through bolts with the low stage side rotary compressing element 9, the partition plate 10 and the high stage side rotary compressing element 11 sandwiched therebetween.

The upper supporting member 12 has a bearing portion 12e at the center. The bearing portion 12a is formed to be thin in thickness and long in size, and fits a sleeve inside to rotatably support the rotating shaft 7. Then on the upper surface side of the upper supporting member 12 is provided a muffling chamber 12b along the outer circumference of the bearing portion 12a, and the muffling chamber 12b communicates with an outlet of a high pressure chamber in the cylinder 9a of the low stage side rotary compressing element. Further, a suction port 12c is provided in the upper supporting member 12. The suction port 12c communicates with an inlet of a low pressure chamber through a passage 9c formed in the cylinder 9a and at the same time communicates with a refrigerant gas lead-in pipe 14 connected to a lead-in opening 2a of the vessel 2 through a sleeve 15.

Further, a substantially cup-shaped cover material 16 is attached onto an upper surface of the upper supporting member 12 in an inverted state by fixing flange portions of the lower end of the cover material 16 with bolts so that an opening surface of the muffling chamber 12b is dosed. The cover material 16 is formed in a high dimension so that the upper end of the cover material 16 is positioned at an upper end (or near an upper end) of the bearing portion 12a in the upper supporting member 12, and a hole 16a is provided at the center of the upper end surface so that the bearing portion 12a is fitted into the hole 16a. Also a discharge hole 16b for discharging a refrigerant gas is provided near the hole 16a (in more details, near an outer diameter portion of the bearing portion 12a). Consequently, the discharge hole 18b of the cover material 16 is positioned just near a lower end portion of the rotor 5b in the motor-operating element 5. It is noted that the central hole 16a of the cover material 16 and the upper end portion of the bearing portion 12a are gas-sealed,

The lower supporting member 13 has a bearing portion 13a at the center, and the bearing portion 13a is formed in a thick wall and in a short dimension and rotatably supports a lower end portion of the rotating shaft 7 without fitting a sleeve inside. Then on the lower surface side of the lower supporting member 13 is provided a muffling chamber 13b along the outer circumference of the bearing portion 13a, and the muffling chamber 13b communicates with an outlet of a high pressure chamber in the cylinder 11a of the high stage side rotary compressing element 11, and at the same time it communicates with a discharge port 13d formed in the lower supporting member 13. This discharge port 13d communicates with a refrigerant gas lead-out pipe 17 connected to the lead-out opening 2b of the vessel 2 through a sleeve 18. Further, a suction port 13c is provided in the lower supporting member 13. The suction port 13c communicates with an inlet of a low pressure chamber through a passage 11c formed in the cylinder 11a and at the same time communicates with a refrigerant gas return lead-in pipe 19 connected to a return lead-in opening 2c of the vessel 2 through a sleeve 20.

Further, a cover plate 21 is fixed onto a lower surface of the lower supporting member 13 with bolts to close an opening surface of the muffling chamber 13b, and the cover plate 21 is provided with a hole 21a at the center. This hole 21a faces a lower end portion of the rotating shaft 7. It is noted that in the present embodiment an oil pump is not attached to a lower end portion of the rotating shaft 7.

Lubricating oil is filled in the closed vessel 1 and an oll reservoir is formed at the bottom portion. However, since in the present embodiment the upper end of the substantially cup-shaped cover material 16 is extendedly formed highly to a position of the upper end or near the upper position of the high dimensional bearing portion 13a, a level h of the oil surface in the oil reservoir 22 during oil filling can be set near the upper end of the cover material 16. Aocordingly, the amount of oil in the oil reservoir 22 can be increased more than the conventional case. However, if the level h of the oil surface exceeds the upper end of the cover material 16, since oil flows inside the cover material 16 through the discharge hole 16, the level h is unsuitable.

Actions of the thus formed internal intermediate pressure type multistage rotary compressor will be described. When the stator 5a of the motor-operating element 5 is energized through the terminal 8, the rotor 5b is rotated and the rotary compressing element 6 is driven by the rotation of the rotor 5b as well as the rotating shaft 7. Then when a low pressure refrigerant gas is introduced through the refrigerant gas lead-in pipe 14 connected to the closed vessel 1, the low pressure refrigerant gas is sucked to the suction port 12c of the upper supporting member 12 and passes through the passage 9c formed in the cylinder 9a of the low stage side rotary compressing element 9 to be sucked into the low pressure chamber, and the low pressure refrigerant gas is compressed into intermediate pressure by eccentric rotation of the roller 9b. The refrigerant gas compressed into the intermediate pressure is discharged to the muffling chamber 12b in the upper supporting member 12 from the high pressure chamber in the cylinder 9a and is discharged to the inside of the dosed vessel 1 from the discharge hole 16b of the cover material 16. It is noted that since an inner volume of the cover material 16 is added to the inner volume of the muffling chamber 12b in the upper supporting member 12, the volume as the muffling chamber is increased. Consequently, the muffling effect is increased so that the noise during operation can be suppressed.

The refrigerant gas supplied from the refrigerant gas lead-in pipe 14 is a refrigerant gas, gas/liquid-separated by the accumulator as mentioned above. However, the refrigerant gas contains oil without perfect gas/liquid separation. Therefore, oil is contained in intermediate pressure refrigerant gas, which is compressed by the low stage side rotary compressing element 9 and discharged into the dosed vessel 1 through the discharge hole 16b of the cover material 16. In this embodiment, since the discharge hole 16b of the cover material 16 is positioned Just near a lower end portion of the rotor 5b in the motor-operating element 5, the intermediate pressure refrigerant gas discharged from the discharge hole 16b is strongly blown onto the lower end portion of the rotor 5b. As a result, oil contained in the intermediate pressure refrigerant gas is efficiently separated and drops down into the oil reservoir 22.

The oil-efficiently-separated intermediate pressure refrigerant gas passes through a small gap between the stator 5a and rotor 5b in the motor-operating element 5 and moves into an upper region of the closed vessel 1. Then the intermediate pressure refrigerant gas is discharged from an discharge opening 2d formed at an upper portion of the vessel 2 and is sent to a cooler (not shown) through a discharge pipe (not shown) connected to the discharge opening 2d and is cooled in the cooler. After that the intermediate pressure refrigerant gas is introduced to the suction port 13c in the lower supporting member 13 through the refrigerant gas return lead-in pipe 19.

The refrigerant gas led in the suction port 13c of the lower supporting member 13 passes through the passage 11c formed in the cylinder 11a of the high stage side rotary compressing element 11 to be sucked in the low pressure chamber, and is compressed into high pressure by eccentric rotation of the roller 11b. The refrigerant gas compressed into high pressure is discharged to the muffling chamber 13b in the lower supporting member 13 from the high pressure chamber in the cylinder 11a and is discharged from the discharge port 13d communicating with the muffling chamber 13b to the outside of the dosed vessel 1 through the refrigerant gas lead-out pipe 17.

Then the high pressure refrigerant gas discharged outside the closed vessel 1 is supplied to for example a gas cooler in a refrigeration cycle such as an air-conditioner (not shown) and cooled by the gas cooler. After that the refrigerant gas is pressure reduced by an expansion valve and is evaporated by an evaporator, and then it passes through an accumulator and is returned to the compressor from the refrigerant gas lead-in pipe 14.

In the operation of the above-mentioned inside intermediate pressure type multistage rotary compressor, an oil reservoir 22 exists at the bottom portion in the closed vessel 1 and oil is pumped up from a lower end portion of the rotating shaft 7 being immersed in the oil reservoir 22. A hole 7c is formed inside the rotating shaft 7 in the axial direction, and the oil in the oil reservoir 22 is raised along the inner surface of the hole 7c of the rotating shaft 7 by the rotation of the rotating shaft 7 so that it is oozed out onto an outer surface of the rotating shaft 7 through small holes 7d formed at a plurality of portions in the rotating shaft 7. The oil oozed out of the small holes 7d lubricates sliding portions of the rotating shaft 7 in the bearing portion 13a of the lower supporting member 13, the bearing portion 12a of the upper supporting member 12, the low stage side eccentric portion 7a and the high stage side eccentric portion 7b. It is noted that the oil raised along the inner surface of the hole 7c of the rotating shaft 7 is discharged from an upper end of the rotating shaft 7 into the dosed vessel and drops down from a small gap between the stator 5a and the rotor 5b in the motor-operating element 5 to return to the oil reservoir 22.

Although a level h of the oil surface in the oil reservoir 22 is positioned near the upper end of the cover material 16 during oil filling, the level h is gradually lowered during operation. In the present embodiment, since the level h of the oil surface during oil filling is set high as described above so that the amount of oil in the oil reservoir 22 is increased. Also since oil is efficiently separated from the intermediate pressure refrigerant gas discharged into the closed vessel 1 through the discharge hole 16b of the cover material 16 and is returned to the oil reservoir 22, the level h of the oil surface is not extremely lowered during operation. Thus, the oil in the oil reservoir 22 can be reliably pumped up from a lower end portion of the rotating shaft 7. Consequently, the lubrication of the sliding portions in the rotating shaft 7 is sufficiently made to protect the sliding portions from wear and at the same time the compressive performance can be highly maintained.

### Example 3

Next, a third embodiment shown in FIG. 3 will be described. In the third embodiment the components (which contain substantially the same components even if their positions are different) corresponding to the above-mentioned first embodiment or second embodiment are denoted by the same reference numerals as described above.

In FiG. 3, the reference numeral 1 is a closed vessel. The closed vessel 1 is comprised of a vessel 2 into a substantially cylindrical shape and end caps 3, 4 attached to opening end portions of the vessel 2, and is provided in such a manner that a motor-operating element 5 and a rotary compressing element 6 are positioned at upper and lower portions in this closed vessel 1 respectively.

The motor-operating element 5 is comprised of an annular stator 5a fixed to an inner surface of the vessel 2 and a rotor 5b, which rotates inside the stator 5a. The rotor 5b is journalled to an upper end portion of a rotating shaft 7. This motor-operating element 5 rotates the rotor 5b by feed to the stator 5a through a terminal 8 attached to the end cap 3.

The terminal 8 is comprised of a base 8a fixed to an mounting hole of the end cap 3 and a plurality of connecting terminals 8b provided on the base 8a while penetrating through an electric insulating material such as glass, synthetic resin or the like. Although not shown, a lower end portion of the connecting terminal 8b is connected to the stator 5a of the motor-operating element 5 through an internal lead wire, and an upper end portion of the connecting terminal 8b is connected to an external power source through an external lead wire.

The rotary compressing element 6 is comprised of a low stage side rotary compressing element 9 and a high stage side compressing element 11 provided on the low stage side rotary compressing element 9 through a partition plate 10. In the rotary compressing element 6. the high stage side rotary compressing element 11 is provided on an upper side of the low stage side rotary compressing element 9 so that the rotary compressing element 6 has the same positional relationship as the conventional general multistage rotary compressing element without inversing the upper and lower positions as in the above-mentioned embodiments. The low stage side rotary compressing element 9 indudes a cylinder 9a and a roller 9b, which rotates eccentrically inside the cylinder 9a while being fitted to a low stage side eccentric portion 7a provided on the rotating shaft 7. Also, the high stage side rotary compressing element 11 includes a cylinder 11a and a rotter 11b, which rotates eccentrically inside the cylinder 11a while being fitted to a high stage side eccentric portion 7b provided on the rotating shaft 7.

A vane biased by a spring not shown always abuts on an outer circumferential surface of the roller 9b of the low stage side rotary compressing element 9 so that the inside of the cylinder 9a is defined between a low pressure chamber and a high pressure chamber. Also a vane biased by a spring always abuts on an outer circumferential surface of the roller 11b of the high stage side rotary compressing element 11 so that the inside of the cylinder 11a is defined between a low pressure chamber and a high pressure chamber. It is noted that the low stage side eccentric portion 7a provided on the rotating shaft 7 and the high stage side eccentric portion 7b are shifted by a phase of 180°.

Further, on the high stage side rotary compressing element 11 is provided an upper supporting member 12 and below the low stage side rotary compressing element 9 is provided a lower supporting member 13. The upper supporting member 12 and the lower supporting member 13 are integrally fixed to each other by a plurality of through bolts with the high stage side rotary compressing element 11, the partition plate 10 and the low stage side rotary compressing element 9 sandwiched therebetween.

The upper supporting member 12 has a bearing portion 12a at the center. The bearing portion 12a is formed to be thin in thickness and long in size, and fits a sleeve inside to rotatably support the rotating shaft 7. On the upper surface side of the upper supporting member 12 is provided a muffling chamber 12b along the outer circumference of the bearing portion 12a, and the muffling chamber 12b communicates with an outlet of a high pressure chamber in the cylinder 11a of the high stage side rotary compressing element 11. Further, a suction port 12c is provided in the upper supporting member 12. The suction port 12c communicates with an inlet of a low pressure chamber through a passage 11c formed in the cylinder 11a and at the same time communicates with a refrigerant gas return lead-in pipe 19 connected to a return lead-in opening 2c of the vessel 2 through a sleeve 20.

Further, a substantially cup-shaped cover material 16 is attached onto an upper surface of the upper supporting member 12 in an inverted state by fixing flange portions of the lower end of the cover material 16 with bolts so that an opening surface of the muffling chamber 12b is closed. The cover material 16 is formed in a high dimension so that the upper end of the cover material 16 is positioned at an upper end (or near an upper end) of the bearing portion 12a in the upper supporting member 12, and a hole 16a is provided at the center of the upper end surface so that the bearing portion 12a is fitted into the hole 16a. Also a discharge hole 16b for discharging a refrigerant gas is provided near the hole 16a. Consequently, the discharge hole 16b of the cover material 16 is positioned just near a lower end portion of the rotor 5b in the motor-operating element 5. It is noted that the central hole 16a of the cover material 16 and the upper end portion of the bearing portion 12a are gas-sealed.

The lower supporting member 13 has a bearing portion 13a at the center, and the bearing portion 13a is formed in a thicker wall and in a shorter dimension than the bearing portion 12a of the upper supporting member 12 and rotatably supports a lower end portion of the rotating shaft 7 without fitting a sleeve inside. Then on the lower surface side of the lower supporting member 13 is provided a muffling chamber 13b along the outer circumference of the bearing portion 13a, and the muffling chamber 13b communicates with an outlet of a high pressure chamber in the cylinder 9a of the low stage side rotary compressing element 9, and at the same time it communicates with a discharge port 13d formed in the lower supporting member 13. This discharge port 13d communicates with a refrigerant gas lead-out pipe 17 connected to the lead-out opening 2b of the vessel 2 through a sleeve 18. Further, a suction port 13c is provided in the lower supporting member 13. The suction port 13c communicates with an inlet of a low pressure chamber through a passage 9c formed in the cylinder 9a and at the same time communicates with a refrigerant gas lead-in pipe 14 connected to a lead-in opening 2a of the vessel 2 through a sleeve 15.

Further, a cover plate 21 is fixed onto a lower surface of the lower supporting member 13 with bolts to close an opening surface of the muffling chamber 13b, and the cover plate 21 is provided with a hole 21a at the center. This hole 21a faces a lower end portion of the rotating shaft 7. It is noted that in the present embodiment an oil pump is not attached to a lower end portion of the rotating shaft 7.

Lubricating oil is filled in the closed vessel 1 and an oil reservoir is formed at the bottom portion. However, since in the present embodiment, the upper end of the substantially cup-shaped cover material 16 is extendedly formed highly to a position of the upper end or near the upper position of the high dimensional bearing portion 13a, a level h of the oil surface in the oil reservoir 22 during oil filling can be set near the upper end of the cover material 16. Accordingly, the amount of oil in the oil reservoir 22 can be increased more than the conventional case. However, if the level h of the oil surface exceeds the upper end of the cover material 16, since oil flows inside the cover material 16 through the discharge hole 16b, the level h is unsuitable.

Actions of the thus formed inside high pressure type multistage rotary compressor will be described. When the stator 5a of the motor-operating element 5 is energized through the terminal 8, the rotor 5b is rotated and the rotary compressing element 6 is driven by the rotation of the rotor 5b as well as the rotating shaft 7. Then when a low pressure refrigerant gas is introduced through the refrigerant gas lead-in pipe 14 connected to the closed vessel 1, the low pressure refrigerant gas is sucked to the suction port 13c of the lower supporting member 13 and passes through the passage 9c formed in the cylinder 9a of the low stage side rotary compressing element 9 to be sucked into the low pressure chamber, and the low pressure refrigerant gas is compressed into intermediate pressure by eccentric rotation of the roller 9b. The refrigerant gas compressed into the intermediate pressure is discharged to the muffling chamber 13b in the lower supporting member 13 from the high pressure chamber in the cylinder 9a and is discharged to the outside of the dosed vessel 1 from the discharge port 13d communicating with the muffling chamber 13b through the refrigerant gas lead-out pipe 17.

The intermediate pressure refrigerant gas discharged outside the closed vessel 1 is sent to a cooler (not shown) through a discharge pipe (not shown) connected to a refrigerant gas lead-out pipe 17 and cooled there. Then the refrigerant gas is introduced to the suction port 12c in the upper supporting member 12 from the refrigerant gas return lead-in pipe 19. The refrigerant gas introduced to the suction port 12c is sucked into a low pressure chamber through the passage 11c formed in the cylinder 11a of the high stage side rotary compressing element 11 and is compressed into high pressure by eccentric rotation of the roller 11b. The refrigerant gas compressed into the high pressure is discharged into a muffling chamber 12b in the upper supporting member 12 from the high-pressure chamber in the cylinder 11a, and is discharged into the closed vessel 1 through the discharge hole 16b of the cover material 16 communicating with the muffling chamber 12b. It is noted that since the inner volume of the cover material 16 is added to the inner volume of the muffling chamber 12b in the upper supporting member 12, the volume as the muffling chamber is increased. Accordingly, the muffling effect is increased so that the noise during operation can be suppressed.

The refrigerant gas supplied from the refrigerant gas lead-in pipe 14 to the suction port 13c of the lower supporting member 13 is a refrigerant gas, gas/liquid-separated by the accumulator as mentioned above. However, the refrigerant gas contains oil without perfect gas/liquid separation. Therefore, oil is contained in intermediate pressure refrigerant gas, which is compressed by the low stage side rotary compressing element 9 and discharged outside the dosed vessel 1. The oil-contained intermediate pressure refrigerant gas is cooled by the cooler (not shown) and then sucked into the suction port 12c of the upper supporting member 12 through a refrigerant gas return iead-in pipe 19. Therefore, oil is contained in the high-pressure refrigerant gas compressed by the high stage side rotary compressing element 11 and discharged into the dosed vessel 1 through the discharge hole 16b of the cover material 16. In this embodiment, since the discharge hole 16b of the cover material 16 is positioned just near a lower end portion of the rotor 5b in the motor-operating element 5, the high pressure refrigerant gas discharged from the discharge hole 16b is strongly blown onto the lower end portion of the rotor 5b. As a result, oil contained in the high-pressure refrigerant gas is efficiently separated and drops down into the oil reservoir 22.

The oil-efficiently-separated high-pressure refrigerant gas passes through a small gap between the stator 5a and rotor 5b in the motor-operating element 5 and moves into an upper region of the dosed vessel 1. Then the high-pressure refrigerant gas is discharged from an discharge opening 2d formed at an upper portion of the vessel 2 to the outside of the closed vessel 1 and is supplied to for example a gas cooler in a refrigeration cycle such as an air-conditioner not shown through a discharge pipe (not shown) connected to the discharge opening 2d to be cooled by the gas cooler. After that the high pressure refrigerant gas is pressure-reduced by an expansion valve and is further evaporated by an evaporator and is returned to the compressor from the refrigerant gas lead-in pipe 14 through an accumulator,

In the operation of the above-mentioned inside high pressure type multistage rotary compressor, an oil reservoir 22 exists at the bottom portion in the dosed vessel 1 and oil is pumped up from a lower end portion of the rotating shaft 7 being immersed in the oil reservoir 22. A hole 7c is formed inside the rotating shaft 7 in the axial direction, and the oil in the oil reservoir 22 is raised along the inner surface of the hole 7c of the rotating shaft 7 by the rotation of the rotating shaft 7 so that it is oozed out onto an outer surface of the rotating shaft 7 through small holes 7d formed at a plurality of portions in the rotating shaft 7. The oil oozed out of the small holes 7d lubricates sliding portions of the rotating shaft 7 in the bearing portion 13a of the lower supporting member 13, the bearing portion 12a of the upper supporting member 12, the low stage side eccentric portion 7a and the high stage side eccentric portion 7b. It is noted that the oil raised along the inner surface of the hole 7c of the rotating shaft 7 is discharged from an upper end of the rotating shaft 7 into the dosed vessel 1 and drops down from a small gap between the stator 5a and the rotor 5b in the motor-operating element 5 to return to the oil reservoir 22,

Although a level h of the oil surface in the oil reservoir 22 is positioned near the upper end of the cover material 16 during oil filling, the level h is gradually lowered during operation. In the present embodiment, since the level h of the oil surface during oil filling is set high as described above so that the amount of oil in the oil reservoir 22 is increased. Also since oil is efficiently separated from the high-pressure refrigerant gas discharged into the closed vessel 1 through the discharge hole 16b of the cover material 16 and is returned to the oil reservoir 22, the level h of the oil surface is not extremely lowered during operation. Thus, the oil in the oil reservoir 22 can be reliably pumped up from a lower end portion of the rotating shaft 7. Consequently, the lubrication of the sliding portions in the rotating shaft 7 is sufficiently made to protect the sliding portions from wear and at the same time the compressive performance can be highly maintained.

The present invention can be applied to the inside intermediate pressure type multistage rotary compressor, the inside high pressure type multistage rotary compressor, and further the inside high pressure type single stage rotary compressor. In addition, the multistage rotary compressor according to the present invention can be used in air conditioners for home use and business use, as well as an automobile air conditioner, and further can be used in an icebox, a refrigerator, a vending machine and the like,

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A multistage rotary compressor comprising a plurality of rotary compressing elements in a dosed vessel, discharging a discharge refrigerant gas in any one of said rotary compressing elements into the dosed vessel, and discharging the refrigerant gas in other rotary compressing elements outside the dosed vessel,
wherein said rotary compressing elements are positioned on upper and lower portions, a cover material, which has a discharge hole for discharging a refrigerant gas into said closed vessel, and defines a discharge muffling chamber, is mounted onto the upper rotary compressing element, and when oil is filled into said dosed vessel, the oil level of said filled oil is designed so as to be slightly lower than the discharge hole in said cover material.

2. A multistage rotary compressor configured so that a motor-operating element in a dosed vessel and rotary compressing elements driven by said motor-operating element are provided on upper and lower portions respectively, a low stage compressing element in said rotary compressing elements is positioned on the upper side and an high stage compressing element in said rotary compressing elements is positioned is on the lower side, an intermediate pressure refrigerant gas compressed by said low stage side rotary compressing element is discharged into said closed vessel, the intermediate pressure refrigerant gas discharged into said closed vessel is taken outside the closed vessel and then is cooled and supplied to said high stage side rotary compressing element to be compressed into high pressure, and the high pressure refrigerant gas is discharged outside said dosed vessel.
wherein an upper supporting member is attached onto the upper side of said low stage side rotary compressing element, and to the upper side of said upper supporting member is attached a substantially cup-shaped cover material, which closes an opening surface of a muffling chamber formed in the upper supporting member, an upper end of said cover material being positioned on an upper end or near the upper end of a bearing portion formed in said upper supporting member, and a discharge hole for discharging a refrigerant gas is provided on an upper end surface of said cover material and near an outer diameter portion of said bearing portion,

3. A multistage rotary compressor configured so that a motor-operating element and rotary compressing elements driven by said motor-operating element are provided on upper and lower portions respectively in a closed vessel, a high stage compressing element in said rotary compressing elements is positioned on the upper side and an low stage compressing element in said rotary compressing elements is positioned is on the lower side, an intermediate pressure refrigerant gas compressed by said low stage side rotary compressing element is taken outside the dosed vessel and then is cooled and supplied to said high stage side rotary compressing element to be compressed into high pressure, and the high pressure refrigerant gas is discharged into said dosed vessel and the high pressure refrigerant gas discharged into said closed vessel is discharged outside said closed vessel,
wherein an upper supporting member is attached onto the upper side of said high stage side rotary compressing element, and to the upper side of said upper supporting member is attached a substantially cup-shaped cover material, which closes an opening surface of a muffling chamber formed in the upper supporting member, an upper end of said cover material being positioned on an upper end or near the upper end of a bearing portion formed in said upper supporting member, and a discharge hole for discharging refrigerant gas is provided on an upper end surface of said cover material and near an outer diameter portion of said bearing portion.
